# EUROPEAN PATENT APPLICATION

(11) **EP 4 502 899 A1**
(43) Date of publication of application: **05.02.2025**
(21) Application number: 23780181.6
(22) Date of filing: 24.03.2023
(51) Int. Cl.: G06Q 10/20, G06Q 50/08, F24F 11/49

(54) **DEVICE REGISTRATION WORK ASSISTANCE SYSTEM**

(30) Priority: 30.03.2022 JP 2022057518
(71) Applicant: DAIKIN INDUSTRIES, LTD., Osaka-shi, Osaka 530-0001 (JP)
(72) Inventor: IIZUKA, Yuki, Osaka-shi, Osaka 530-001 (JP); YURA, Yoshinori, Osaka-shi, Osaka 530-001 (JP); FUJIWARA, Masayuki, Osaka-shi, Osaka 530-001 (JP)
(74) Representative: Global IP Europe Patentanwaltskanzlei
(86) International application number: PCT/JP2023/011844
(87) International publication number: WO 2023/190171

(57) **Abstract**

There is a problem that it takes cost and time if a worker performs a registration work by randomly visiting installation locations. A device registration work assistance system includes a plurality of indoor units, a management apparatus, and a mobile terminal (60). The plurality of indoor units are installed at a plurality of installation locations in a building (BL). The management apparatus estimates arrangement information of the indoor units based on information relating to electromagnetic waves acquired by the indoor units performing BLE communication with each other. The management apparatus calculates candidates for the indoor unit installed at an installation location by collating the arrangement information with position information of the installation locations. If the management apparatus determines that the indoor unit actually installed at the installation location cannot be identified from among the candidates for the indoor unit installed at the installation location, the mobile terminal (60) notifies the position information of the installation location and unique information of the candidates for the indoor unit installed at the installation location.

## Description

### Technical Field

The present disclosure relates to a device registration work assistance system.

### Background Art

As indicated in PTL 1 (Japanese Unexamined Patent Application Publication No. 2009-192149), there is a technique for automatically performing a registration work of registering, for a plurality of devices installed at a plurality of installation locations in a building, position information of the installation locations and unique information of the devices installed at the installation locations in association with each other.

### Summary of Invention

### Technical Problem

It is less likely that all the registration works automatically performed as in PTL 1 are accurately performed. Therefore, to ensure accuracy, a worker needs to go to the installation location of the device and manually perform the registration work. In this case, there is a problem that it takes cost and time if the worker performs the registration work by randomly visiting the installation locations.

### Solution to Problem

A device registration work assistance system according to a first aspect includes a plurality of devices, a management apparatus, and a notification apparatus. The plurality of devices are installed at a plurality of installation locations in a building. The management apparatus stores position information of the installation locations and unique information of the devices. The management apparatus is capable of communicating with the devices. The notification apparatus notifies a worker of information for assisting a registration work. The registration work is a work of registering the position information of the installation locations and the unique information of the devices installed at the installation locations in association with each other in the management apparatus. The devices include a communication unit that performs wireless communication with each other. The management apparatus estimates arrangement information of the devices based on information relating to electromagnetic waves acquired by the devices performing wireless communication with each other. The management apparatus calculates one or more candidates for the device installed at the installation location by collating the arrangement information with the position information of the installation locations. In a case where the management apparatus determines that the device actually installed at the installation location cannot be identified from among the one or more candidates for the device installed at the installation location, the notification apparatus notifies the position information of the installation location and the unique information of the one or more candidates for the device installed at the installation location.

In the device registration work assistance system according to the first aspect, in the case where the management apparatus determines that the device actually installed at the installation location cannot be identified from among the one or more candidates for the device installed at the installation location, the notification apparatus notifies the position information of the installation location and the unique information of the one or more candidates for the device installed at the installation location. As a result, the worker can efficiently perform the registration work by performing the registration work only for the installation location for which the identification cannot be made, and the cost and time required for the registration work can be reduced.

A device registration work assistance system according to a second aspect is the device registration work assistance system according to the first aspect, in which the installation locations include a first location and a second location different from the first location. The notification apparatus includes an input unit. The input unit inputs information relating to the registration work. In a case where the management apparatus determines that the devices actually installed at the first location and the second location cannot be identified, when the position information of the first location and the unique information of the device installed at the first location are registered in association with each other using the input unit, the management apparatus re-calculates one or more candidates for the device installed at the second location. In a case where the management apparatus determines that the device actually installed at the second location cannot be identified, the notification apparatus notifies the position information of the second location and the unique information of the one or more candidates for the device installed at the second location.

In the device registration work assistance system according to the second aspect, the configuration allows the worker to know the latest installation location for which the installed device cannot be identified, and the latest one or more candidates for the device installed at the installation location, each time the worker registers a device.

A device registration work assistance system according to a third aspect is the device registration work assistance system according to the first aspect, in which the installation locations include a first location and a second location different from the first location. The devices include a first device and a second device different from the first device. The notification apparatus includes an input unit. The input unit inputs information relating to the registration work. In a case where the first device and the second device are candidates for devices installed at the first location and the second location and are not candidates for the device installed at an installation location other than the first location and the second location, when the position information of the first location and the unique information of the first device are registered in association with each other using the input unit, the management apparatus registers the position information of the second location and the unique information of the second device in association with each other.

In the device registration work assistance system according to the third aspect, the configuration allows the worker to save the time of registering the device.

A device registration work assistance system according to a fourth aspect is the device registration work assistance system according to the second aspect or the third aspect, in which the notification apparatus includes a display unit. The display unit displays the information relating to the registration work. The display unit displays the position information of the installation location and the unique information of the one or more candidates for the device installed at the installation location.

A device registration work assistance system according to a fifth aspect is the device registration work assistance system according to the fourth aspect, in which the position information of the installation location displayed on the display unit includes an image indicating a position of the installation location. When the image is selected using the input unit, the display unit displays the unique information of the one or more candidates for the device installed at the installation location.

In the device registration work assistance system according to the fifth aspect, the configuration prevents the image from being hidden by the unique information of the one or more candidates for the device even when there are a relatively large number of images indicating the positions of the installation locations.

A device registration work assistance system according to a sixth aspect is the device registration work assistance system according to the fourth aspect or the fifth aspect, in which when one of the one or more candidates for the device installed at the installation location on the display unit is selected using the input unit, the management apparatus registers the position information of the installation location and the unique information of the selected device in association with each other.

A device registration work assistance system according to a seventh aspect is the device registration work assistance system according to any one of the first to sixth aspects, in which the notification apparatus notifies the position information of the installation location and the unique information of the one or more candidates for the device installed at the installation location by sound.

A device registration work assistance system according to an eighth aspect is the device registration work assistance system according to any one of the first to seventh aspects, in which in the case where the management apparatus determines that the device actually installed at the installation location cannot be identified, the management apparatus performs one of the following. The management apparatus performs a first registration process of registering the position information of the installation location and one of the one or more candidates for the device installed at the installation location in association with each other, and then the notification apparatus notifies the position information of the installation location and the unique information of the one or more candidates for the device installed at the installation location. Alternatively, the management apparatus does not perform the first registration process, and the notification apparatus notifies the position information of the installation location and the unique information of the one or more candidates for the device installed at the installation location.

A device registration work assistance system according to a ninth aspect is the device registration work assistance system according to any one of the first to eighth aspects, in which the management apparatus calculates, for each combination of the installation location and the device, a first sum that is a sum of distances, for each device, between the installation location where the device is installed in the combination and the location of the device in the arrangement information. The management apparatus aggregates reciprocals of the first sums for each of the devices appearing at the installation location, among the combinations in which the first sum is smaller than a predetermined value. The management apparatus regards the device having a large aggregated value as being the device that is highly likely to be actually installed at the installation location.

### Brief Description of Drawings

[Fig. 1] Fig. 1 is a schematic configuration diagram of a device registration work assistance system.
[Fig. 2] Fig. 2 is a diagram illustrating a refrigerant circuit of a refrigerant system.
[Fig. 3] Fig. 3 is a functional block diagram of an air conditioning system.
[Fig. 4] Fig. 4 is a sectional view of a building for illustrating a state in which indoor units are installed in the building.
[Fig. 5] Fig. 5 is a functional block diagram of a management apparatus and a mobile terminal.
[Fig. 6] Fig. 6 is a diagram illustrating an example of processing performed by a registration unit of the management apparatus.
[Fig. 7A] Fig. 7A is an example of a screen displayed on the mobile terminal.
[Fig. 7B] Fig. 7B is an example of a screen displayed on the mobile terminal.
[Fig. 7C] Fig. 7C is an example of a screen displayed on the mobile terminal.
[Fig. 7D] Fig. 7D is an example of a screen displayed on the mobile terminal.
[Fig. 7E] Fig. 7E is an example of a screen displayed on the mobile terminal.
[Fig. 8A] Fig. 8A is a flowchart for describing an example of processing by the device registration work assistance system.
[Fig. 8B] Fig. 8B is a flowchart for describing an example of the processing by the device registration work assistance system.
[Fig. 8C] Fig. 8C is a flowchart for describing an example of the processing by the device registration work assistance system.
[Fig. 8D] Fig. 8D is a flowchart for describing an example of the processing by the device registration work assistance system.

### Description of Embodiments

### (1) Overall configuration

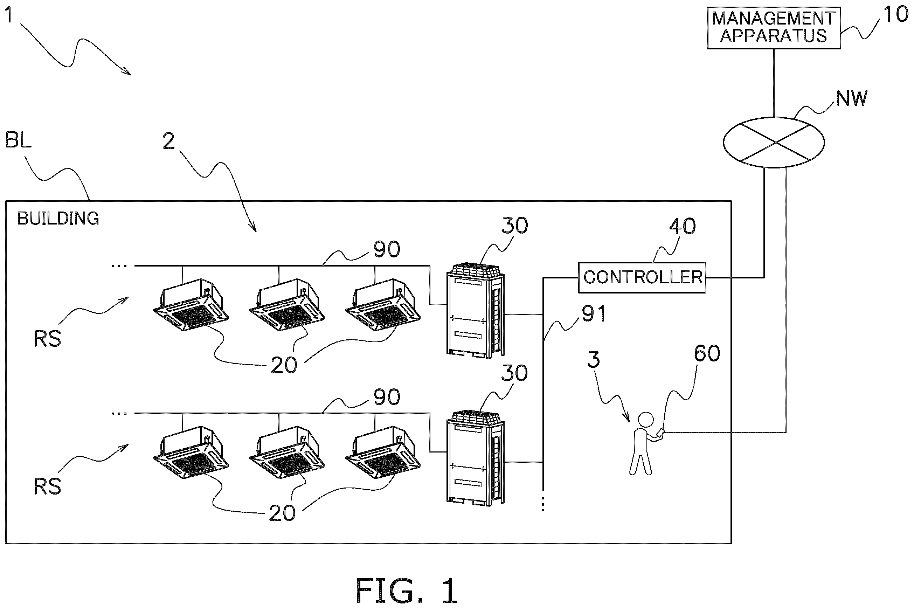

Fig. 1 is a schematic configuration diagram of a device registration work assistance system 1. As illustrated in Fig. 1, a plurality of indoor units 20 (devices) are installed at a plurality of installation locations in a building BL. A worker 3 performs an address registration work for the indoor units 20 in the building BL. The address registration work is a work of registering position information 81 of the installation locations of the indoor units 20 and unique information of the indoor units 20 installed at the installation locations in association with each other in a management apparatus 10, which will be described later. The device registration work assistance system 1 notifies the worker 3 of information for assisting the address registration work.

As illustrated in Fig. 1, the device registration work assistance system 1 mainly includes the management apparatus 10, an air conditioning system 2, and a mobile terminal 60 (notification apparatus) carried by the worker 3. The management apparatus 10, the air conditioning system 2, and the mobile terminal 60 are communicably connected by a network NW. The network NW may include a LAN, a WAN, the Internet, a mobile communication network, and the like.

### (2) Detailed configuration

Hereinafter, for example, indoor units 20a to 20d or the like may be referred to as indoor units 20 or the like when they are described without being distinguished from each other.

### (2-1) Air conditioning system

The air conditioning system 2 constitutes a vapor compression refrigeration cycle, and performs air conditioning (such as cooling and heating) of a target space. In the present embodiment, the air conditioning system 2 is a so-called multi-type air conditioning system for buildings. As illustrated in Fig. 1, the air conditioning system 2 is installed in the building BL. The air conditioning system 2 includes one or a plurality of refrigerant systems RS and a controller 40. Each refrigerant system RS includes an outdoor unit 30 and a plurality of indoor units 20. The plurality of indoor units 20 constituting one refrigerant system RS may all be installed on the same floor of the building BL, or may be installed separately on different floors. The outdoor unit 30 and the indoor units 20 are communicably connected by a communication line 90. The outdoor unit 30 and the controller 40 are communicably connected by a communication line 91.

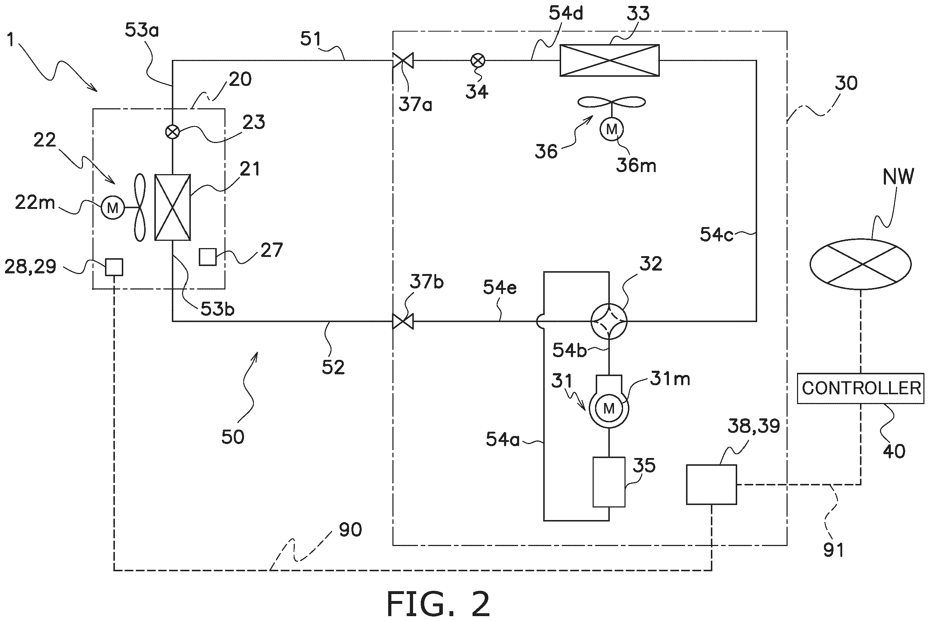

Fig. 2 is a diagram illustrating a refrigerant circuit 50 of the refrigerant system RS. Since the description of each of the indoor units 20 constituting the refrigerant system RS is basically the same, one indoor unit 20 among the plurality of indoor units 20 constituting the refrigerant system RS is illustrated as a representative in Fig. 2. As illustrated in Fig. 2, the outdoor unit 30 and the indoor unit 20 are connected by a liquid refrigerant connection pipe 51 and a gas refrigerant connection pipe 52, thereby constituting the refrigerant circuit 50.

### (2-1-1) Indoor unit

In the present embodiment, the indoor unit 20 is a ceiling-embedded unit installed in the ceiling of a floor in the building BL. As illustrated in Fig. 2, the indoor unit 20 mainly includes an indoor heat exchanger 21, an indoor fan 22, an indoor expansion valve 23, a communication unit 27, an indoor storage unit 28, an indoor control unit 29, and various sensors such as an indoor temperature sensor. As illustrated in Fig. 2, the indoor unit 20 includes a liquid refrigerant pipe 53a that connects a liquid-side end of the indoor heat exchanger 21 and the liquid refrigerant connection pipe 51. The indoor unit 20 also includes a gas refrigerant pipe 53b that connects a gas-side end of the indoor heat exchanger 21 and the gas refrigerant connection pipe 52.

The indoor heat exchanger 21 performs heat exchange between refrigerant flowing through the indoor heat exchanger 21 and air in the target space. The indoor heat exchanger 21 is, for example, a fin-and-tube heat exchanger including a plurality of heat transfer fins and a plurality of heat transfer tubes.

The indoor fan 22 is a fan that supplies air in the target space to the indoor heat exchanger 21. The indoor fan 22 is, for example, a centrifugal fan, such as a turbo fan or a sirocco fan. As illustrated in Fig. 2, the indoor fan 22 is driven by an indoor fan motor 22m. The number of rotations of the indoor fan motor 22m can be controlled by an inverter.

The indoor expansion valve 23 is a mechanism for adjusting the pressure and flow rate of the refrigerant flowing through the liquid refrigerant pipe 53a. In the present embodiment, the indoor expansion valve 23 is an electronic expansion valve whose opening degree is adjustable.

The communication unit 27 is a network interface device for performing BLE (Bluetooth (registered trademark) Low Energy) communication (wireless communication). The communication unit 27 has a function of transmitting and receiving electromagnetic waves for BLE communication, and measuring the radio wave intensity of the received electromagnetic waves for BLE communication.

The indoor storage unit 28 is a storage medium, such as a RAM, a ROM, or a flash memory. The indoor storage unit 28 stores, for example, a program executed by the indoor control unit 29, data necessary for executing the program, and the like. The indoor storage unit 28 stores unique information thereof. The unique information is information that enables identification of the indoor unit 20, such as a MAC address, an IP address, a number assigned to the indoor unit 20 for convenience, or the name of the indoor unit 20. In the present embodiment, the MAC address is used as the unique information unless otherwise noted. In addition, the indoor storage unit 28 stores BLE communication information 80, which will be described later.

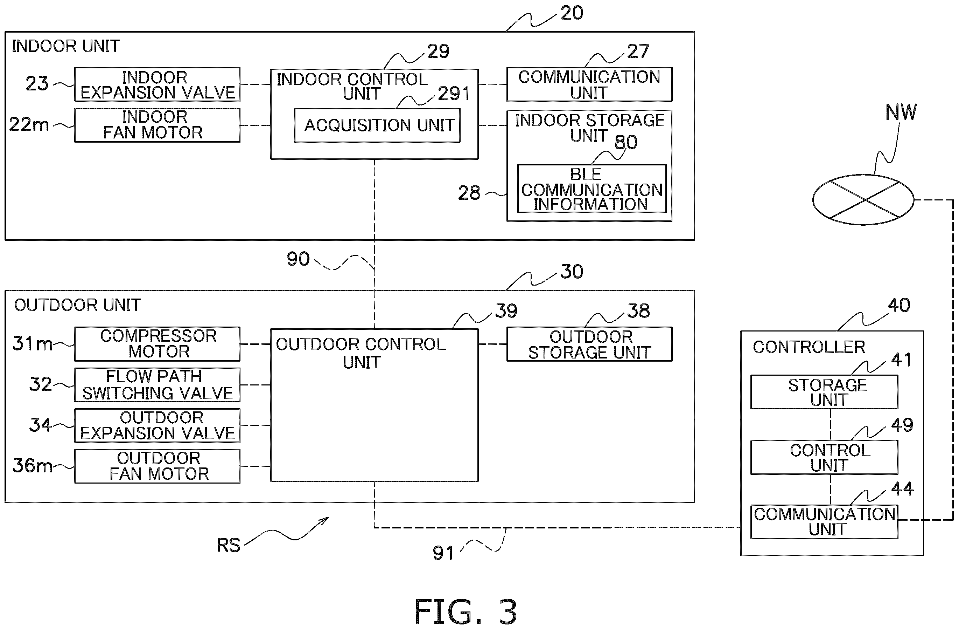

The indoor control unit 29 is a processor, such as a CPU or a GPU. Fig. 3 is a functional block diagram of the air conditioning system 2. For the sake of simplicity, Fig. 3 illustrates one refrigerant system RS and one indoor unit 20 among the plurality of indoor units 20 constituting the refrigerant system RS. As illustrated in Fig. 3, the indoor control unit 29 is electrically connected to various devices of the indoor unit 20, including the indoor expansion valve 23, the indoor fan motor 22m, the communication unit 27, and the indoor storage unit 28. The indoor control unit 29 reads the program stored in the indoor storage unit 28, and performs predetermined arithmetic operation processing in accordance with the program to control the operation of each of the units constituting the indoor unit 20. In addition, the indoor control unit 29 can write an arithmetic operation result to the indoor storage unit 28, and read information stored in the indoor storage unit 28, in accordance with the program. The indoor control unit 29 is able to receive various signals transmitted from an operation remote controller (not illustrated). The various signals include, for example, signals for indicating the start and stop of an operation, and signals related to various settings. The signals related to various settings include, for example, signals related to a set temperature and an air volume. In addition, the indoor control unit 29 exchanges various kinds of information, such as control signals, measurement signals, and signals related to various settings, with the outdoor unit 30 via the communication line 90.

The indoor control unit 29 can transmit the unique information thereof to another indoor unit 20 or the mobile terminal 60 by BLE communication. Further, the indoor control unit 29 can receive the unique information of another indoor unit 20 transmitted by the other indoor unit 20 by BLE communication. Further, the indoor control unit 29 can measure the round-trip time of the electromagnetic waves for BLE communication with another other indoor unit 20 by transmitting the electromagnetic waves for BLE communication to the other indoor unit 20 and receiving a reply notification for the transmission.

As illustrated in Fig. 3, the indoor control unit 29 includes an acquisition unit 291 as a functional block.

The acquisition unit 291 acquires information relating to the electromagnetic waves transmitted and received by BLE communication, and unique information of the indoor unit 20 that has performed the BLE communication. The information relating to the electromagnetic waves includes, for example, the radio wave intensity and the round-trip time. The acquisition unit 291 stores, in the indoor storage unit 28, the acquired information relating to the electromagnetic waves transmitted and received by BLE communication, and the unique information of the indoor unit 20 that has performed the BLE communication, as the BLE communication information 80. For example, when the information relating to the electromagnetic waves is radio wave intensity, the unique information of another indoor unit 20 received from the other indoor unit 20 and the radio wave intensity of the electromagnetic waves for BLE communication received from the other indoor unit 20 are stored in association with each other in the BLE communication information 80 of the indoor unit 20. For example, when the information relating to the electromagnetic waves is the round-trip time, the unique information of another indoor unit 20 received from the other indoor unit 20 and the round-trip time of the electromagnetic waves for BLE communication with the other indoor unit 20 are stored in association with each other in the BLE communication information 80 of the indoor unit 20. In the present embodiment, the radio wave intensity is used as the information relating to the electromagnetic waves unless otherwise noted.

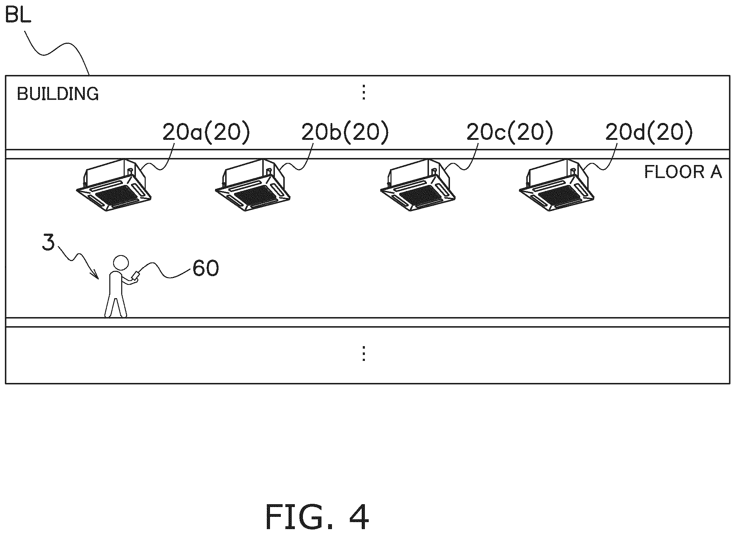

Fig. 4 is a cross-sectional view of the building BL for illustrating a state in which the indoor units 20 are installed in the building BL. In Fig. 4, four indoor units 20a to 20d are installed on a floor A in the building BL. Table 1 below presents an example of the BLE communication information 80 acquired by the indoor unit 20a. Hereinafter, it is assumed that the BLE communication information 80 is sorted in descending order of radio wave intensity unless otherwise noted.

**[Table 1]**

| MAC address | Radio wave intensity |
|---|---|
| 22-22-22-22-22-22 (Indoor unit 20b) | b (dBm) |
| 33-33-33-33-33-33 (Indoor unit 20c) | c (dBm) |
| 44-44-44-44-44-44 (Indoor unit 20d) | d (dBm) |

As illustrated in Fig. 4, the distance between the indoor unit 20a and the indoor units 20b to 20d increases in the order of the indoor unit 20b, the indoor unit 20c, and the indoor unit 20d. Therefore, in Table 1, the radio wave intensity of the electromagnetic waves for BLE communication received by the indoor unit 20a is strong in the order of the indoor unit 20b, the indoor unit 20c, and the indoor unit 20d.

### (2-1-2) Outdoor unit

The outdoor unit 30 is installed outside the building BL, such as on the roof of the building BL. As illustrated in Fig. 2, the outdoor unit 30 mainly includes a compressor 31, a flow path switching valve 32, an outdoor heat exchanger 33, an outdoor expansion valve 34, an accumulator 35, an outdoor fan 36, a liquid-side shutoff valve 37a, a gas-side shutoff valve 37b, an outdoor storage unit 38, an outdoor control unit 39, and various sensors such as an outdoor temperature sensor. The outdoor unit 30 also includes a suction pipe 54a, a discharge pipe 54b, gas refrigerant pipes 54c and 54e, and a liquid refrigerant pipe 54d.

The suction pipe 54a connects the flow path switching valve 32 and a suction side of the compressor 31. The suction pipe 54a is provided with the accumulator 35. The discharge pipe 54b connects a discharge side of the compressor 31 and the flow path switching valve 32. The gas refrigerant pipe 54c connects the flow path switching valve 32 and a gas side of the outdoor heat exchanger 33. The liquid refrigerant pipe 54d connects a liquid side of the outdoor heat exchanger 33 and the liquid refrigerant connection pipe 51. The liquid refrigerant pipe 54d is provided with the outdoor expansion valve 34. The liquid-side shutoff valve 37a is provided at a connecting portion between the liquid refrigerant pipe 54d and the liquid refrigerant connection pipe 51. The gas refrigerant pipe 54e connects the flow path switching valve 32 and the gas refrigerant connection pipe 52. The gas-side shutoff valve 37b is provided at a connecting portion between the gas refrigerant pipe 54e and the gas refrigerant connection pipe 52. The liquid-side shutoff valve 37a and the gas-side shutoff valve 37b are valves that are manually opened and closed.

As illustrated in Fig. 2, the compressor 31 suctions low-pressure refrigerant from the suction pipe 54a, compresses the refrigerant by a compression mechanism (not illustrated), and discharges the compressed refrigerant to the discharge pipe 54b.

The compressor 31 is, for example, a rotary or scroll positive displacement compressor. The compression mechanism of the compressor 31 is driven by a compressor motor 31m. The number of rotations of the compressor motor 31m can be controlled by an inverter.

The flow path switching valve 32 is a mechanism that switches the refrigerant flow path between a first state and a second state. When in the first state, as indicated by the solid lines inside the flow path switching valve 32 in Fig. 2, the flow path switching valve 32 allows the suction pipe 54a to communicate with the gas refrigerant pipe 54e, and allows the discharge pipe 54b to communicate with the gas refrigerant pipe 54c. When in the second state, as indicated by the broken lines in the flow path switching valve 32 in Fig. 2, the flow path switching valve 32 allows the suction pipe 54a to communicate with the gas refrigerant pipe 54c, and allows the discharge pipe 54b to communicate with the gas refrigerant pipe 53e.

The flow path switching valve 32 places the refrigerant flow path in the first state during a cooling operation. At this time, the refrigerant discharged from the compressor 31 flows through the outdoor heat exchanger 33, the outdoor expansion valve 34, the indoor expansion valve 23, and the indoor heat exchanger 21 in this order in the refrigerant circuit 50, and returns to the compressor 31. In the first state, the outdoor heat exchanger 33 functions as a condenser, and the indoor heat exchanger 21 functions as an evaporator.

The flow path switching valve 32 places the refrigerant flow path in the second state during a heating operation. At this time, the refrigerant discharged from the compressor 31 flows through the indoor heat exchanger 21, the indoor expansion valve 23, the outdoor expansion valve 34, and the outdoor heat exchanger 33 in this order in the refrigerant circuit 50, and returns to the compressor 31. In the second state, the outdoor heat exchanger 33 functions as an evaporator, and the indoor heat exchanger 21 functions as a condenser.

The outdoor heat exchanger 33 exchanges heat between the refrigerant flowing through the outdoor heat exchanger 33 and air outside the building BL. The outdoor heat exchanger 33 is, for example, a fin-and-tube heat exchanger including a plurality of heat transfer fins and a plurality of heat transfer tubes.

The outdoor expansion valve 34 is a mechanism for adjusting the pressure and flow rate of the refrigerant flowing through the liquid refrigerant pipe 54d. As illustrated in Fig. 2, the outdoor expansion valve 34 is provided at the liquid refrigerant pipe 54d. In the present embodiment, the outdoor expansion valve 34 is an electronic expansion valve whose opening degree is adjustable.

The accumulator 35 is a container having a gas-liquid separation function of separating an inflowing refrigerant into gas refrigerant and liquid refrigerant. The refrigerant flowing into the accumulator 35 is separated into gas refrigerant and liquid refrigerant, and the gas refrigerant collected in the upper space flows into the compressor 31.

The outdoor fan 36 is a fan that supplies air outside the building BL to the outdoor heat exchanger 33. The outdoor fan 36 is, for example, an axial fan such as a propeller fan. As illustrated in Fig. 2, the outdoor fan 36 is driven by an outdoor fan motor 36m. The number of rotations of the outdoor fan motor 36m can be controlled by an inverter.

The outdoor storage unit 38 is a storage medium, such as a RAM, a ROM, or a flash memory. The outdoor storage unit 38 stores a program that is executed by the outdoor control unit 39, data necessary for executing the program, and the like.

The outdoor control unit 39 is a processor, such as a CPU or a GPU. As illustrated in Fig. 3, the outdoor control unit 39 is electrically connected to various devices of the outdoor unit 30, including the compressor motor 31m, the flow path switching valve 32, the outdoor expansion valves 34, the outdoor fan motor 36m, and the outdoor storage unit 38. The outdoor control unit 39 reads the program stored in the outdoor storage unit 38, and performs predetermined arithmetic operation processing in accordance with the program to control the operation of each of the units constituting the outdoor unit 30. In addition, the outdoor control unit 39 can write an arithmetic operation result to the outdoor storage unit 38, and read information stored in the outdoor storage unit 38, in accordance with the program. The outdoor control unit 39 exchanges various kinds of information, such as control signals, measurement signals, and signals related to various settings, with the indoor unit 20 via the communication line 90. In addition, the outdoor control unit 39 exchanges various kinds of information, such as control signals, measurement signals, and signals related to various settings, with the controller 40 via the communication line 91.

### (2-1-3) Controller

The controller 40 is a so-called edge device that centrally controls one or a plurality of refrigerant systems RS. The controller 40 is installed in, for example, a server room of the building BL. As illustrated in Fig. 3, the controller 40 mainly includes a storage unit 41, a communication unit 44, and a control unit 49.

The storage unit 41 is a storage device, such as a RAM, a ROM, or an HDD. The storage unit 41 stores a program that is executed by the control unit 49, data necessary for executing the program, and the like. The storage unit 41 stores unique information of all the indoor units 20 constituting the air conditioning system 2.

The communication unit 44 includes a network interface device for communicating with the management apparatus 10 via the network NW, and a network interface device for communicating with the outdoor unit 30 via the communication line 91.

The control unit 49 is a processor, such as a CPU or a GPU. The control unit 49 reads and executes the program stored in the storage unit 41 to implement various functions of the controller 40. In addition, the control unit 49 can write an arithmetic operation result to the storage unit 41, and read information stored in the storage unit 41, in accordance with the program.

The control unit 49 controls the operations of the indoor control unit 29 and the outdoor control unit 39 based on control signals received from the management apparatus 10, control signals received from the operation remote controller via the indoor unit 20, measurement signals of various sensors, and the like.

For example, the control unit 49 acquires unique information from all the indoor units 20 constituting the air conditioning system 2, and stores the unique information in the storage unit 41.

Further, for example, when the BLE communication information 80 of a certain indoor unit 20 is requested from the management apparatus 10, the control unit 49 causes the designated indoor unit 20 to acquire the BLE communication information 80, and transmits the BLE communication information 80 to the management apparatus 10.

Further, for example, upon receiving an instruction to perform a cooling operation from the operation remote controller via the indoor unit 20, the control unit 49 switches the flow path switching valve 32 to the first state. Then, the control unit 49 adjusts the number of rotations of the compressor 31, the temperature of the refrigerant flowing through the outdoor heat exchanger 33, the opening degree of the outdoor expansion valve 34, the opening degree of the indoor expansion valve 23, and the like so that the refrigerant temperature in the indoor heat exchanger 21 becomes a target refrigerant temperature corresponding to a set temperature.

Further, for example, upon receiving an instruction to perform a heating operation from the operation remote controller via the indoor unit 20, the control unit 49 switches the flow path switching valve 32 to the second state. Then, the control unit 49 adjusts the number of rotations of the compressor 31, the temperature of the refrigerant flowing through the outdoor heat exchanger 33, the opening degree of the outdoor expansion valve 34, the opening degree of the indoor expansion valve 23, and the like so that the indoor refrigerant temperature in the indoor heat exchanger 21 becomes a target refrigerant temperature corresponding to a set temperature.

### (2-2) Management apparatus

The management apparatus 10 is a computer provided on the cloud. The management apparatus 10 manages the air conditioning system 2 using various kinds of information collected from the air conditioning system 2. The management apparatus 10 may also collect various kinds of information from an air conditioning system installed in a building other than the building BL and manage a plurality of air conditioning systems including the air conditioning system 2.

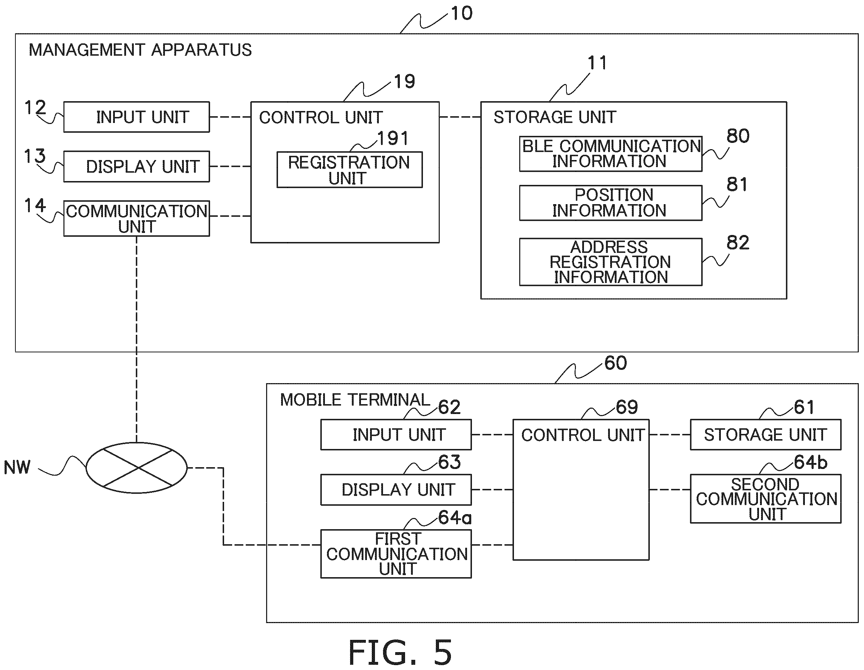

Fig. 5 is a functional block diagram of the management apparatus 10 and the mobile terminal 60. As illustrated in Fig. 5, the management apparatus 10 mainly includes a storage unit 11, an input unit 12, a display unit 13, a communication unit 14, and a control unit 19.

### (2-2-1) Storage unit

The storage unit 11 is a storage device, such as a RAM, a ROM, or an HDD. The storage unit 11 stores a program executed by the control unit 19, data necessary for executing the program, and the like. The storage unit 11 stores unique information of all the indoor units 20 constituting the air conditioning system 2. In addition, the storage unit 11 stores the BLE communication information 80 and the position information 81 and address registration information 82 which will be described later.

### (2-2-2) Input unit

The input unit 12 includes a keyboard and a mouse. Various instructions to the management apparatus 10 and various kinds of information can be input via the input unit 12.

An administrator of the management apparatus 10 stores, as the position information 81 of the installation locations of the indoor units 20, information in which (two dimensional) coordinates of the installation locations of the indoor units 20 with reference to a predetermined point on the floor are associated with addresses (place numbers) of the installation locations, in the storage unit 11 via the input unit 12. Here, the "addresses" are determined by the administrator, as appropriate. Table 2 below is an example of the position information 81 in a case where four indoor units 20 are installed on the floor A in the building BL, as illustrated in Fig. 4. Hereinafter, a specific installation location may be indicated using the "address", such as an installation location A-1.

**[Table 2]**

| Coordinates (m) | Address |
|---|---|
| (1,2) | A-1 |
| (3,5) | A-2 |
| (10,2) | A-3 |
| (6,6) | A-4 |

Before the address registration work is performed, for example, it is unclear which indoor unit 20 among the indoor units 20a to 20d (the indoor unit 20 having which unique information) is installed at the installation location A-1.

### (2-2-3) Display unit

The display unit 13 is a monitor. The display unit 13 can display an input screen for inputting various kinds of information to the management apparatus 10, various kinds of information stored in the storage unit 11, and the like.

### (2-2-4) Communication unit

The communication unit 14 is a network interface device for communicating with the air conditioning system 2 via the network NW.

### (2-2-5) Control unit

The control unit 19 is a processor, such as a CPU or a GPU. The control unit 19 reads and executes the program stored in the storage unit 11 to implement various functions of the management apparatus 10. In addition, the control unit 19 can write an arithmetic operation result to the storage unit 11, and read information stored in the storage unit 11, in accordance with the program.

For example, the control unit 19 acquires the unique information of all the indoor units 20 constituting the air conditioning system 2 via the controller 40, and stores the unique information in the storage unit 11.

As illustrated in Fig. 5, the control unit 19 includes a registration unit 191 as a functional block.

### (2-2-5-1) Registration unit

The registration unit 191 is a functional block for implementing an address registration work. Immediately after the indoor units 20 are installed in the building BL, the management apparatus 10 knows the installation locations of the indoor units 20 based on the position information 81, but does not know which indoor unit 20 is installed at each installation location. Therefore, the registration unit 191 registers the position information 81 of the installation locations of the indoor units 20 and the unique information of the indoor units 20 installed at the installation locations in association with each other. In other words, the registration unit 191 creates the address registration information 82 in which the unique information of the installed indoor units 20 is added to each of the records of the position information 81 of Table 2 Table 3 below presents the address registration information 82 before the processing by the registration unit 191 is performed.

**[Table 3]**

| Coordinates (m) | Address | MAC address |
|---|---|---|
| (1,2) | A-1 | Cannot be identified (Indoor units 20a to 20d) |
| (3,5) | A-2 | Cannot be identified (Indoor units 20a to 20d) |
| (10,2) | A-3 | Cannot be identified (Indoor units 20a to 20d) |
| (6,6) | A-4 | Cannot be identified (Indoor units 20a to 20d) |

In Table 3, since the processing by the registration unit 191 has not been performed, the fact that the indoor unit 20 cannot be identified and all the indoor units 20a to 20d which are candidates for the installed indoor unit 20 are stored in the "MAC address" for each installation location.

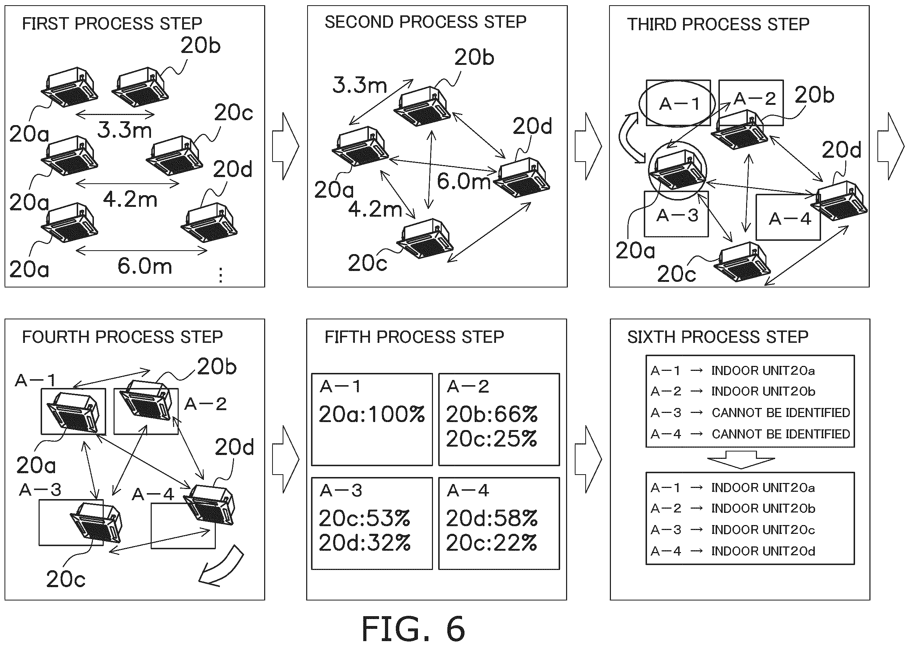

Fig. 6 is a diagram illustrating an example of the processing performed by the registration unit 191. As illustrated in Fig. 6, the processing performed by the registration unit 191 includes six process steps. Here, the address registration work for the indoor units 20a to 20d installed on the floor A in Fig. 4 will be described.

In a first process step, the registration unit 191 estimates the distances between the indoor units 20. The control unit 19, for example, acquires the BLE communication information 80 of each indoor unit 20, and estimates the distances between the indoor units 20 based on the radio wave intensity or the round-trip time. In the first process step of Fig. 6, the control unit 19 estimates that the distance between the indoor unit 20a and the indoor unit 20b is 3.3 m, the distance between the indoor unit 20a and the indoor unit 20c is 4.2 m, and the distance between the indoor unit 20a and the indoor unit 20d is 6.0 m.

In a second process step, the registration unit 191 estimates the relative positions of the indoor units 20. The control unit 19 estimates the relative positions of the indoor units 20 based on the distances between the indoor units 20 estimated in the first process step.

In a third process step, the registration unit 191 registers one of the plurality of installation locations and one of the pieces of the unique information of the plurality of indoor units 20 in association with each other. Specifically, the registration unit 191 transmits the address registration information 82 (Table 3) before the processing by the registration unit 191 is performed to the mobile terminal 60. The worker 3 in the building BL uses the mobile terminal 60 that has received the address registration information 82 to transmit one set of correspondence between the installation location and the unique information of the indoor unit 20 to the management apparatus 10. Upon acquiring the one set of correspondence between the installation location and the unique information of the indoor unit 20 from the mobile terminal 60, the registration unit 191 registers the acquired installation location and the unique information of the indoor unit 20 in association with each other in the address registration information 82. Here, as illustrated in the third process step of Fig. 6, it is assumed that the registration unit 191 has acquired the correspondence between the installation location A-1 and the indoor unit 20a from the mobile terminal 60, and has registered the installation location A-1 and the indoor unit 20a in association with each other in the address registration information 82. Table 4 below presents the address registration information 82 after the third process step.

**[Table 4]**

| Coordinates (m) | Address | MAC address |
|---|---|---|
| (1,2) | A-1 | 11-11-11-11-11-11 (Indoor unit 20a) |
| (3,5) | A-2 | Cannot be identified (Indoor units 20a to 20d) |
| (10,2) | A-3 | Cannot be identified (Indoor units 20a to 20d) |
| (6,6) | A-4 | Cannot be identified (Indoor units 20a to 20d) |

In a fourth process step, the registration unit 191 estimates the arrangement information of the indoor units 20. The registration unit 191 uses affine transformation or the like on a coordinate space to bring the coordinates of each installation location and the position of the corresponding indoor unit 20 as close to each other as possible. Specifically, in the coordinate space, the coordinates of the installation location and the position of the indoor unit 20 that have been registered in the third process step are matched with each other. With the matched position as a base point, the positions of the other indoor units 20 are rotated, for example, so as to bring the coordinates of the other installation locations and the positions of the other indoor units 20 as close to each other as possible. In the present embodiment, the position of each indoor unit 20 after the coordinates of each installation location and the position of each indoor unit 20 have been brought as close to each other as possible is referred to as the arrangement information of the indoor unit 20. In the fourth process step of Fig. 6, the registration unit 191 matches the installation location A-1 with the position of the indoor unit 20a, and with the position of the indoor unit 20a as the base point, rotates the positions of the indoor units 20b to 20d clockwise so as to bring the installation locations A-2 to A-4 and the positions of the indoor units 20b to 20d as close to each other as possible.

In a fifth process step, the registration unit 191 calculates candidates for the indoor unit 20 installed at an installation location by collating the estimated arrangement information with the position information 81 of the installation location.

First, the registration unit 191 calculates, for each combination of the installation location and the indoor unit 20, a first sum that is a sum of the distances, for each indoor unit 20, between the installation location where the indoor unit 20 is installed in the combination and the position of the indoor unit 20 in the estimated arrangement information. Table 5 below presents the combinations of the installation locations and the indoor units 20.

**[Table 5]**

| Combination | Installation location | | | | First sum | Reciprocal of first sum |
|---|---|---|---|---|---|---|
| | A-1 | A-2 | A-3 | A-4 | | |
| P1 | 20a | 20b | 20c | 20d | 1 | 1 |
| P2 | 20a | 20b | 20d | 20c | 2 | 1/2 |
| P3 | 20a | 20c | 20b | 20d | 3 | 1/3 |
| P4 | 20a | 20c | 20d | 20b | 4 | 1/4 |
| P5 | 20a | 20d | 20c | 20b | 5 | 1/5 |
| P6 | 20a | 20d | 20b | 20c | 6 | 1/6 |

For example, a combination P1 is a combination in which the indoor unit 20a is installed at the installation location A-1, the indoor unit 20b is installed at the installation location A-2, the indoor unit 20c is installed at the installation location A-3, and the indoor unit 20d is installed at the installation location A-4. Since the installation location A-1 and the unique information of the indoor unit 20a have been registered in association with each other in the third process step, the indoor unit 20 of the installation location A-1 is fixed to the indoor unit 20a. Therefore, Table 5 presents six combinations of the three indoor units 20b to 20d by permutation of the three indoor units. The "first sum" in Table 5 indicates the sum, in each combination, of the distances for each indoor unit 20 between the installation locations A-1 to A-4 and the positions of the indoor units 20a to 20d in the arrangement information estimated in the fourth process step. For example, the first sum for the combination P1 is (the distance between the installation location A-1 and the position of the indoor unit 20a) + (the distance between the installation location A-2 and the position of the indoor unit 20b) + (the distance between the installation location A-3 and the position of the indoor unit 20c) + (the distance between the installation location A-4 and the position of the indoor unit 20d). The smaller the value of the "first sum" of the combination, the more it is likely that the installation locations and the positions of the indoor units 20 coincide with each other as a whole. The records in Table 5 are sorted in ascending order of the "first sum".

Next, the registration unit 191 aggregates the reciprocals of the first sums for each indoor unit 20 that appears at the installation location, among the combinations in which the first sum is smaller than a predetermined value. In Table 6 below, combinations in which the first sum is smaller than "6 (predetermined value)" are extracted from Table 5. The reciprocal of the value of the "first sum" is stored in the "Reciprocal of first sum" of Table 6.

**[Table 6]**

| Combination | Installation location | | | | First sum | Reciprocal of first sum |
|---|---|---|---|---|---|---|
| | A-1 | A-2 | A-3 | A-4 | | |
| P1 | 20a | 20b | 20c | 20d | 1 | 1 |
| P2 | 20a | 20b | 20d | 20c | 2 | 1/2 |
| P3 | 20a | 20c | 20b | 20d | 3 | 1/3 |
| P4 | 20a | 20c | 20d | 20b | 4 | 1/4 |
| P5 | 20a | 20d | 20c | 20b | 5 | 1/5 |

For example, for the records in which the indoor unit 20b appears at the installation location A-2 in Table 6, when the reciprocals of the first sums are added (aggregated), the aggregated value is 3/2 (= 1 + 1/2). For the records in which the indoor unit 20c appears at the installation location A-2, when the reciprocals of the first sums are added, the aggregated value is 7/12 (= 1/3 + 1/4). Since there just one record in which the indoor unit 20d appears at the installation location A-2, the aggregated value is 1/5.

Next, the registration unit 191 regards the indoor units 20 having a large aggregated value as the indoor unit 20 that is highly likely to be actually installed at the installation location. In Table 7 below, the reciprocals of the first sums in Table 6 are aggregated for each of the indoor units 20 that appear at the installation locations, and the percentages of the aggregated values are calculated for each installation location.

**[Table 7]**

| Installation location | Indoor unit | | | |
|---|---|---|---|---|
| | 20a | 20b | 20c | 20d |
| A-1 | 100% | | | |
| A-2 | | 66% | 25% | 9% |
| A-3 | | 15% | 53% | 32% |
| A-4 | | 20% | 22% | 58% |

For example, at the installation location A-2, the values obtained by aggregating the reciprocals of the first sums for the indoor units 20b to 20d are 3/2, 7/12, and 1/5, respectively. Thus, percentages of these reciprocals are 660, 25%, and 90, respectively. In other words, the candidates for the indoor unit 20 installed at the installation location A-2 are the indoor units 20b to 20d. In yet other words, it can be considered that the probability that the indoor unit 20b is installed at the installation location A-2 is 650, the probability that the indoor unit 20c is installed at the installation location A-2 is 25%, and the probability that the indoor unit 20d is installed at the installation location A-2 is 90. In the fifth process step of Fig. 6, the top two indoor units 20 that are highly likely to be actually installed at each installation location are presented.

In a sixth process step, the registration unit 191 applies a threshold to the probabilities calculated in the fifth process step to determine, for each installation location, whether the indoor unit 20 actually installed at the installation location can be identified from among the candidates for the indoor unit 20 installed at the installation location.

Specifically, the registration unit 191 determines that, for the installation location for which the maximum value of the probability that the indoor unit 20 is installed is equal to or greater than the threshold, the indoor unit 20 actually installed at the installation location can be identified from the candidates for the indoor unit 20 installed at the installation location. Then, the registration unit 191 registers the indoor unit 20 having the highest probability and the installation location thereof in association with each other. On the other hand, the registration unit 191 determines that, for the installation location for which the maximum value of the probability that the indoor unit 20 is installed is less than the threshold, the indoor unit 20 actually installed at the installation location cannot be identified from the candidates for the indoor unit 20 installed at the installation location. Here, the threshold of the probability is "65%". As illustrated in Table 7, for the installation location A-2, the maximum value of the probability that the indoor unit 20 is installed is 66% and is greater than or equal to the threshold. Accordingly, the registration unit 191 registers the indoor unit 20b having the maximum probability in association with the installation location A-2. On the other hand, for the installation locations A-3 and A-4, the maximum values of the probability that the indoor unit 20 is installed are 53% and 58%, respectively and are less than the threshold. Accordingly, the registration unit 191 determines that the indoor units 20 actually installed at the installation locations A-3 and A-4 cannot be identified from the candidates for the indoor units 20 installed at the installation locations A-3 and A-4. Table 8 below presents the address registration information 82 after the determination. On the upper side of the sixth process step in Fig. 6, the contents of Table 8 are illustrated in a simplified manner.

**[Table 8]**

| Coordinates (m) | Address | MAC address |
|---|---|---|
| (1,2) | A-1 | 11-11-11-11-11-11 (Indoor unit 20a) |
| (3,5) | A-2 | 22-22-22-22-22-22 (Indoor unit 20b) |
| (10,2) | A-3 | Cannot be identified (Indoor units 20c, 20d) |
| (6,6) | A-4 | Cannot be identified (Indoor units 20c, 20d) |

If it is determined that, for a certain installation location, the indoor unit 20 actually installed at the installation location cannot be identified from the candidates for the indoor unit 20 installed at the installation location, the registration unit 191 transmits the address registration information 82 (Table 8) after the determination to the mobile terminal 60. The worker 3 in the building BL uses the mobile terminal 60 that has received the address registration information 82 to transmit one set of correspondence between the installation location and the unique information of the indoor unit 20 to the management apparatus 10, for the installation location for which the installed indoor unit 20 cannot be identified. Upon acquiring the one set of correspondence between the installation location and the unique information of the indoor unit 20 from the mobile terminal 60, the registration unit 191 registers the acquired installation location and unique information of the indoor unit 20 in association with each other in the address registration information 82. Every time the registration is performed, the registration unit 191 calculates candidates for the indoor unit 20 installed at an unregistered installation location, as described above. Then, if it is determined that the indoor unit 20 actually installed at the unregistered installation location cannot be identified, the registration unit 191 transmits the address registration information 82 after the determination to the mobile terminal 60.

In the present embodiment, the indoor units 20c and 20d are candidates for the indoor units 20 installed at the installation locations A-3 and A-4, and are not candidates for the indoor units 20 installed at installation locations other than the installation locations A-3 and A-4. Therefore, for example, the registration unit 191 may register the installation location A-4 and the unique information of the indoor unit 20d in association with each other upon acquiring the correspondence between the installation location A-3 and the indoor unit 20c and registering the installation location A-3 and the unique information of the indoor unit 20c in association with each other (before acquiring the correspondence between the installation location A-4 and the indoor unit 20d).

Table 9 below presents the final address registration information 82. On the lower side of the sixth process step in Fig. 6, the contents of Table 9 are illustrated in a simplified manner.

**[Table 9]**

| Coordinates (m) | Address | MAC address |
|---|---|---|
| (1,2) | A-1 | 11-11-11-11-11-11 (Indoor unit 20a) |
| (3,5) | A-2 | 22-22-22-22-22-22 (Indoor unit 20b) |
| (10,2) | A-3 | 33-33-33-33-33-33 (Indoor unit 20c) |
| (6,6) | A-4 | 44-44-44-44-44-44 (Indoor unit 20d) |

### (2-3) Mobile terminal

The mobile terminal 60 is a terminal carried by the worker 3 in the building BL. The mobile terminal 60 notifies the worker 3 of information for assisting a registration work. In the present embodiment, the mobile terminal 60 is a tablet. However, the mobile terminal 60 is not limited to this and may be a smartphone or the like. As illustrated in Fig. 5, the mobile terminal 60 mainly includes a storage unit 61, an input unit 62, a display unit 63, a first communication unit 64a, a second communication unit 64b, and a control unit 69.

The storage unit 61 is a storage device, such as a RAM, a ROM, or an HDD. The storage unit 61 stores a program executed by the control unit 69, data necessary for executing the program, and the like.

The input unit 62 is a touch panel. Various instructions to the mobile terminal 60 and various kinds of information including information relating to the address registration work can be input using the input unit 62.

The display unit 63 is a touch panel. In other words, the touch panel serves as both the input unit 62 and the display unit 63. The display unit 63 can display, for example, an input screen for inputting various kinds of information, including information relating to the address registration work, to the mobile terminal 60, and various kinds of information stored in the storage unit 61.

The first communication unit 64a is a network interface device for communicating with the management apparatus 10 via the network NW.

The second communication unit 64b is a network interface device for performing BLE communication. The second communication unit 64b has a function of transmitting and receiving the electromagnetic waves for BLE communication, and measuring the radio wave intensity of the received electromagnetic waves for BLE communication.

The control unit 69 is a processor, such as a CPU or a GPU. The control unit 69 reads and executes the program stored in the storage unit 61 to implement various functions of the mobile terminal 60. In addition, the control unit 69 can write an arithmetic operation result to the storage unit 61, and read information stored in the storage unit 61, in accordance with the program.

The control unit 69 displays, for example, on the display unit 63, a radio wave intensity list in which the unique information received from the indoor unit 20 by BLE communication and the radio wave intensity of the received electromagnetic waves for BLE communication are associated with each other. The worker 3 in Fig. 4 displays the radio wave intensity list, as illustrated in Table 10 below, on the display unit 63. Hereinafter, it is assumed that the radio wave intensity list is sorted in descending order of radio wave intensity unless otherwise noted.

**[Table 10]**

| MAC address | Radio wave intensity |
|---|---|
| 11-11-11-11-11-11 (Indoor unit 20a) | a (dBm) |
| 22-22-22-22-22-22 (Indoor unit 20b) | b (dBm) |
| 33-33-33-33-33-33 (Indoor unit 20c) | c (dBm) |

In Fig. 4, since the worker 3 is directly below the indoor unit 20a, the radio wave intensity of the electromagnetic waves for BLE communication received from the indoor unit 20a, closest to the worker 3, is the highest. In other words, the worker 3 can know the unique information of the indoor unit 20 directly above the worker 3 by displaying the radio wave intensity list directly below the indoor units 20 and focusing on the indoor unit 20 having the highest radio wave intensity.

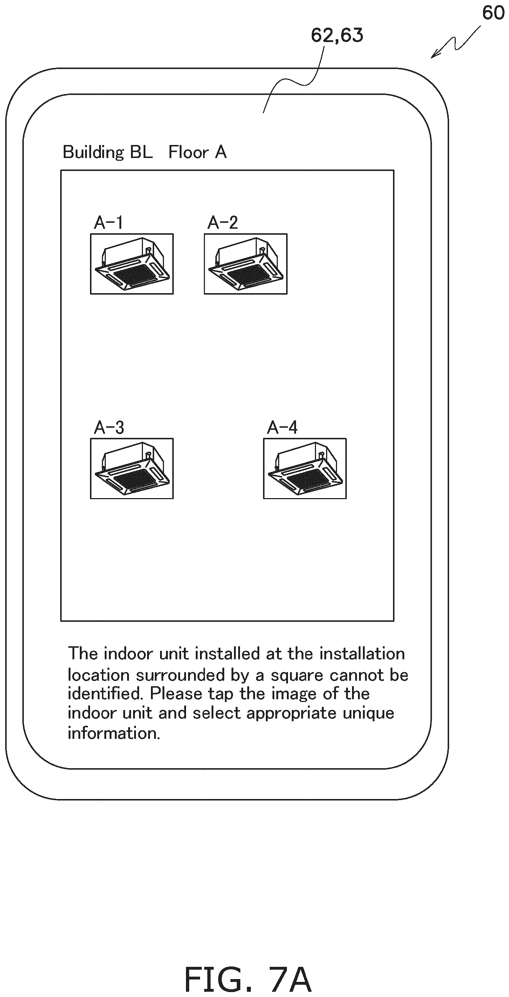

Based on the address registration information 82 received from the management apparatus 10, the control unit 69 displays (notifies) the position information 81 of the installation location of the indoor unit 20 and the unique information of the candidates for the indoor unit 20 installed at the installation location on the display unit 63. Figs. 7A to 7E are examples of screens displayed on the mobile terminal 60 based on the address registration information 82. In Figs. 7A to 7E, images of the indoor units 20 indicating the positions of the installation locations of the indoor units 20 in accordance with the "coordinates" of the address registration information 82 are displayed. In addition, in Figs. 7A to 7E, an installation location for which the installed indoor unit 20 cannot be identified in accordance with the "MAC address" of the address registration information 82 is surrounded by a square.

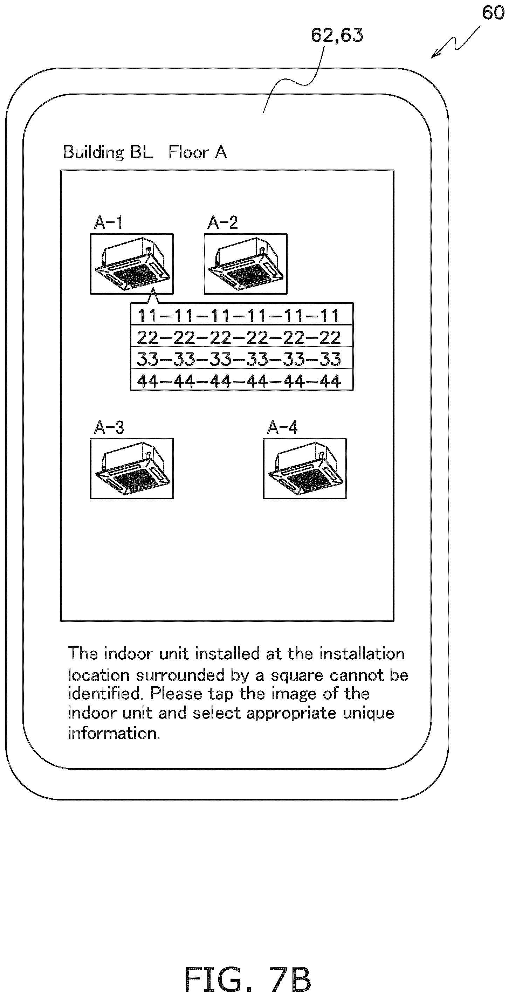

Figs. 7A and 7B are the screens displayed based on the address registration information 82 of Table 3. When the image of the indoor unit 20 indicating the installation location A-1 is tapped (selected) by the worker 3 using the input unit 62 in Fig. 7A, the control unit 69 displays the unique information of the candidates for the indoor unit 20 installed at the installation location A-1, as illustrated in Fig. 7B. At this time, when the image of the indoor unit 20 indicating the installation location A-1 is further tapped by the worker 3 using the input unit 62, the image returns to the state of Fig. 7A. In Fig. 7B, the unique information of the indoor units 20a to 20d is displayed as the unique information of the candidates for the indoor unit 20 installed at the installation location A-1 in accordance with the address registration information 82 of Table 3. Further, when one of the candidates for the indoor unit 20 installed at the installation location is tapped by the worker 3 using the input unit 62 in Fig. 7B, the control unit 69 transmits the correspondence between the installation location and the unique information of the tapped indoor unit 20 to the management apparatus 10. For example, the worker 3 moves directly below the installation location A-1, knows the unique information of the indoor unit 20a directly above the worker 3, and taps the unique information of the indoor unit 20a among the unique information of the candidates for the indoor unit 20 installed at the installation location A-1. Accordingly, the control unit 69 transmits the correspondence between the installation location A-1 and the unique information of the indoor unit 20a to the management apparatus 10, as illustrated in the third process step described above.

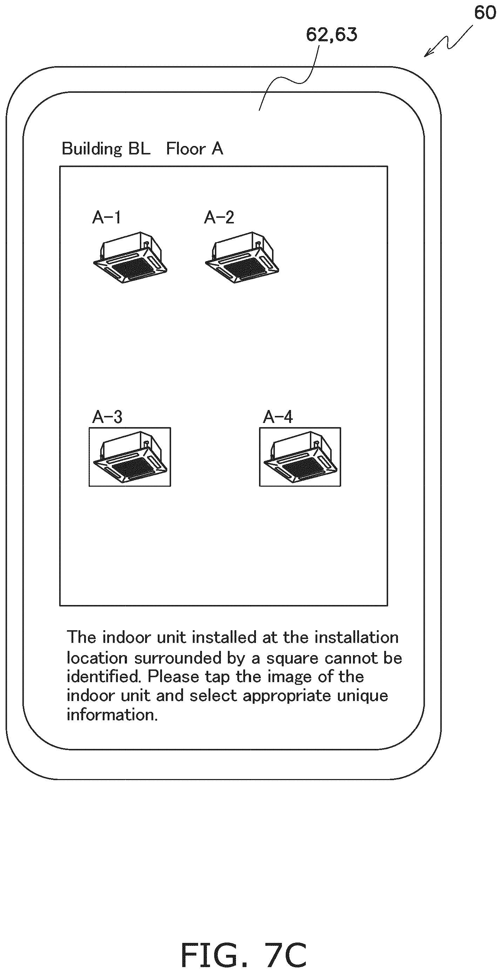

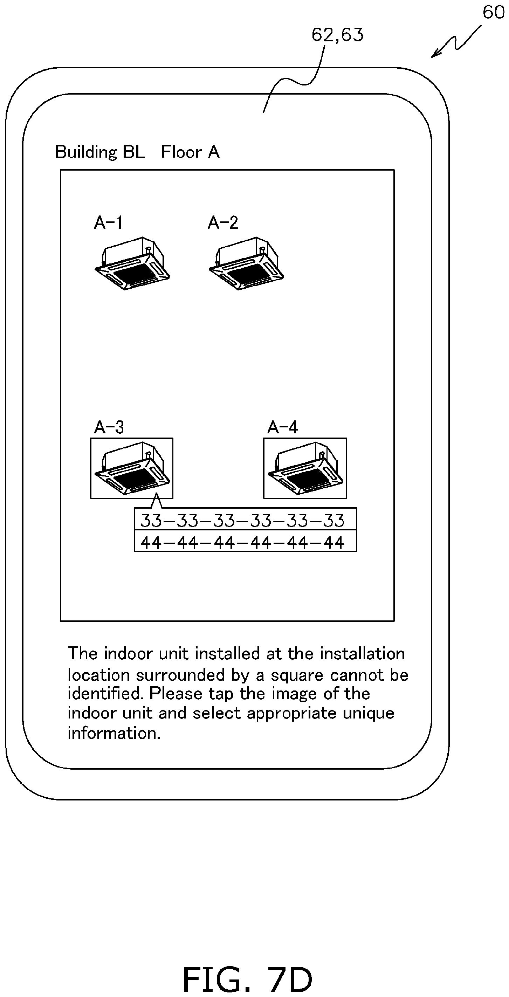

Figs. 7C and 7D illustrate screens displayed based on the address registration information 82 of Table 8. When the image of the indoor unit 20 indicating the installation location A-3 is tapped by the worker 3 using the input unit 62 in Fig. 7C, the control unit 69 displays the unique information of the candidates for the indoor unit 20 installed at the installation location A-3, as illustrated in Fig. 7D. In Fig. 7D, the unique information of the indoor units 20c and 20d is displayed as the unique information of the candidates for the indoor unit 20 installed at the installation location A-3 in accordance with the address registration information 82 of Table 8. For example, the worker 3 moves directly below the installation location A-3, knows the unique information of the indoor unit 20c directly above the worker 3, and taps the unique information of the indoor unit 20c among the unique information of the candidates for the indoor unit 20 installed at the installation location A-3. Accordingly, the control unit 69 can transmit the correspondence between the installation location A-3 and the unique information of the indoor unit 20c to the management apparatus 10, for example, in the sixth process step described above. When the image of the indoor unit 20 indicating the already registered installation location A-1 is tapped by the worker 3 using the input unit 62 in Fig. 7C, the control unit 69 displays the unique information of the indoor unit 20a registered for the installation location A-1, as illustrated in Fig. 7D.

### (3) Processing

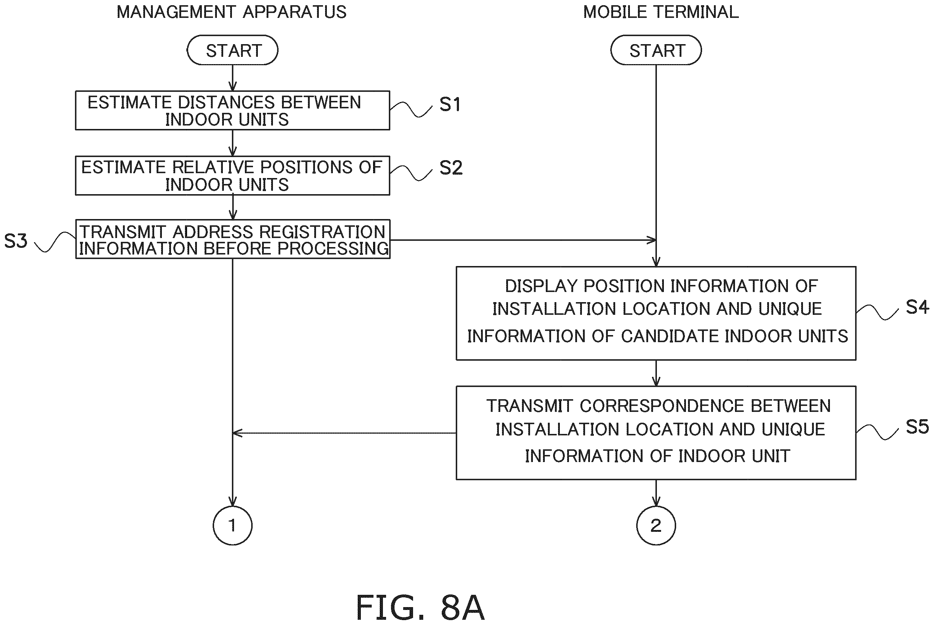

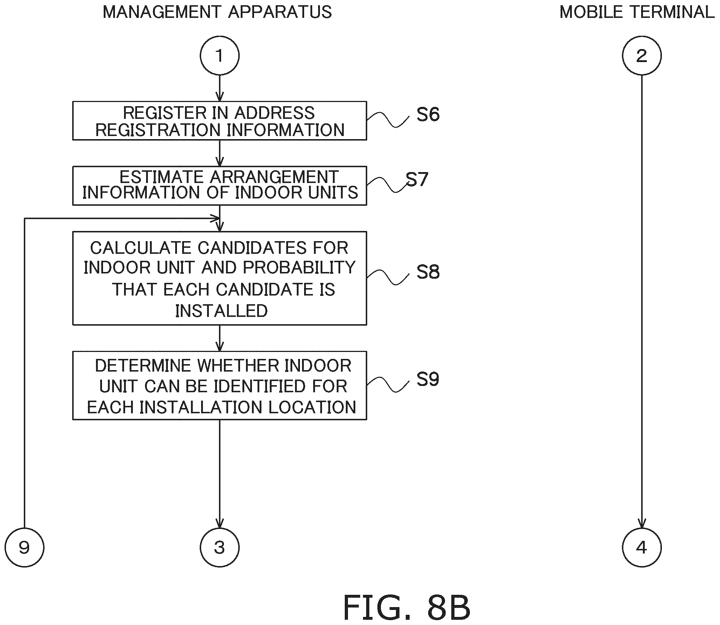

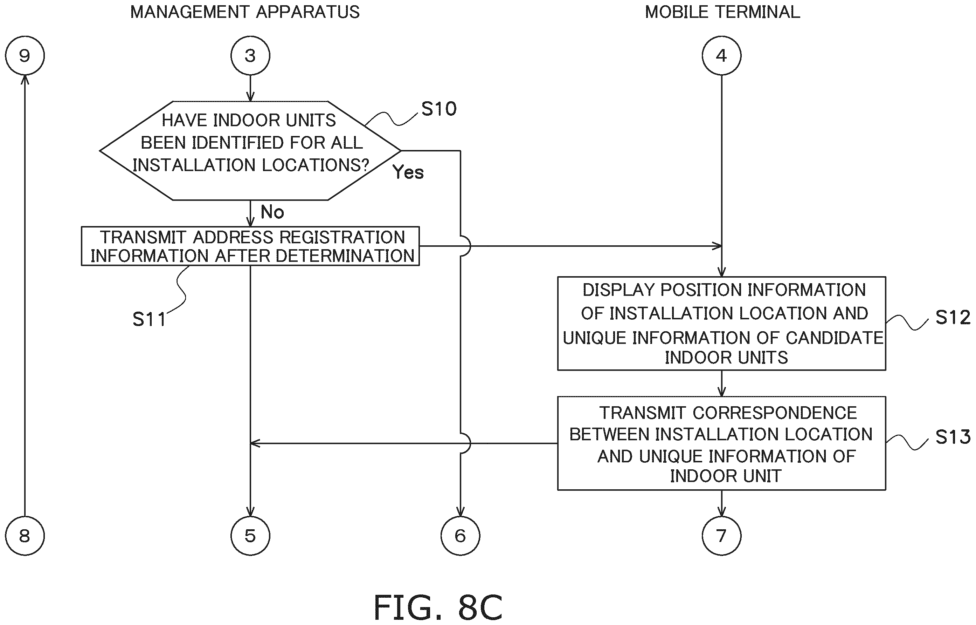

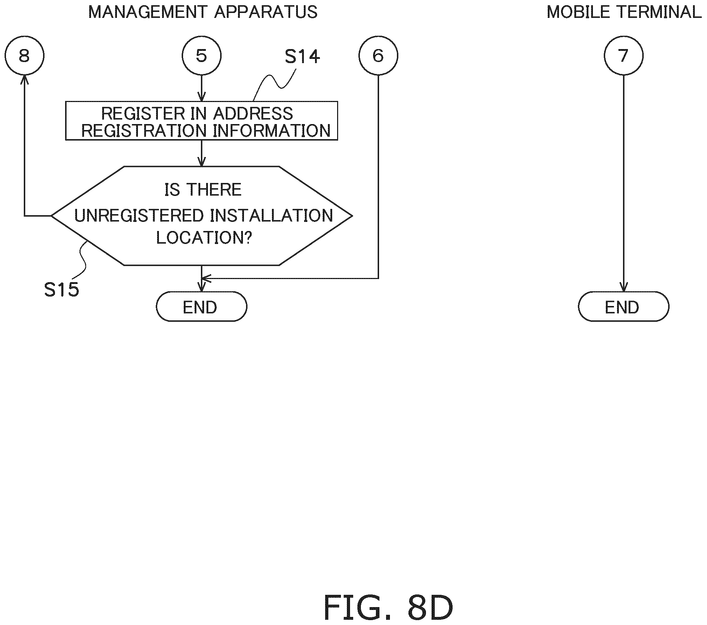

An example of processing by the device registration work assistance system 1 will be described with reference to flowcharts of Figs. 8A to 8D.

As indicated in step S1, the management apparatus 10 acquires the BLE communication information 80 of each indoor unit 20, and estimates the distances between the indoor units 20 based on the radio wave intensity or the round-trip time.

After step S1 is finished, the management apparatus 10 estimates the relative positions of the indoor units 20 based on the distances between the indoor units 20 estimated in the first process step, as indicated in step S2.

After step S2 is finished, the management apparatus 10 transmits the address registration information 82 before the processing by the registration unit 191 is performed to the mobile terminal 60, as indicated in step S3.

After step S3 is finished, the mobile terminal 60 displays the position information 81 of the installation location of the indoor unit 20 and the unique information of the candidates for the indoor unit 20 installed at the installation location, as indicated in step S4.

After step S4 is finished, the worker 3 uses the mobile terminal 60 to transmit one set of correspondence between the installation location and the unique information of the indoor unit 20 to the management apparatus 10, as indicated in step S5.

After step S5 is finished, upon acquiring the one set of correspondence between the installation location and the unique information of the indoor unit 20 from the mobile terminal 60, the management apparatus 10 registers the acquired installation location and unique information of the indoor unit 20 in association with each other in the address registration information 82, as indicated in step S6.

After step S6 is finished, the management apparatus 10 estimates the arrangement information of the indoor units 20, as indicated in step S7.

After step S7 is finished, the management apparatus 10 collates the estimated arrangement information with the position information 81 of the installation location, to calculate candidates for the indoor unit 20 installed at the installation location and the probability that each candidate is installed at the installation location, as indicated in step S8.

After step S8 is finished, the management apparatus 10 applies a threshold to the calculated probabilities, and determines, for each installation location, whether the indoor unit 20 actually installed at the installation location can be identified from among the candidates for the indoor unit 20 installed at the installation location, as indicated in step S9. For the installation location for which it is determined that the actually installed indoor unit 20 can be identified, the management apparatus 10 registers the indoor unit 20 having the highest probability and the installation location in association with each other.

After step S9 is finished, the management apparatus 10 determines whether the actually installed indoor unit 20 has been identified for all of the installation locations, as indicated in step S10. When the actually installed indoor unit 20 has been identified for all of the installation locations, the management apparatus 10 ends the processing. When it is determined that, for a certain installation location, the indoor unit 20 actually installed at the installation location cannot be identified from among the candidates for the indoor unit 20 installed at the installation location, the processing proceeds to step S11.

After the processing proceeds from step S10 to step S11, the management apparatus 10 transmits the address registration information 82 after the determination to the mobile terminal 60.

After step S11 is finished, the mobile terminal 60 displays the position information 81 of the installation location of the indoor unit 20 and the unique information of the candidates for the indoor unit 20 installed at the installation location, as indicated in step S12.

After step S12 is finished, the worker 3 uses the mobile terminal 60 to transmit, for the installation location for which the installed indoor unit 20 cannot be identified, one pair of correspondence between the installation location and the unique information of the indoor unit 20 to the management apparatus 10, as indicated in step S13.

After step S13 is finished, upon acquiring the one set of correspondence between the installation location and the unique information of the indoor unit 20 from the mobile terminal 60, the management apparatus 10 registers the acquired installation location and unique information of the indoor unit 20 in association with each other in the address registration information 82, as indicated in step S14.

After step S14 is finished, the management apparatus 10 determines whether there is an unregistered installation location, as indicated in step S15. When there is an unregistered installation location, the processing returns to step S8, and the management apparatus 10 calculates candidates for the indoor unit 20 installed at the unregistered installation location and the probability that each candidate is installed at the installation location. If there is no unregistered installation location, the management apparatus 10 ends the processing.

### (4) Features

(4-1) In the related art, there is a technique for automatically performing a registration work of registering, for a plurality of devices installed at a plurality of installation locations in a building, position information of the installation locations and unique information of the devices installed at the installation locations in association with each other.

However, it is less likely that all the registration works automatically performed as in the related art are accurately performed. Therefore, to ensure accuracy, a worker needs to go to the installation location of the device and manually perform the registration work. In this case, there is a problem that it takes cost and time if the worker performs the registration work by randomly visiting the installation locations.

The device registration work assistance system 1 of the present embodiment includes the plurality of indoor units 20, the management apparatus 10, and the mobile terminal 60. The plurality of indoor units 20 are installed at a plurality of installation locations in the building BL. The management apparatus 10 stores the position information 81 of the installation locations and unique information of the indoor units 20. The management apparatus 10 is capable of communicating with the indoor units 20. The mobile terminal 60 notifies the worker 3 of information for assisting a registration work. The registration work is a work of registering the position information 81 of the installation locations and the unique information of the indoor units 20 installed at the installation locations in association with each other in the management apparatus 10. The indoor units 20 include the communication unit 27 that performs BLE communication with each other. The management apparatus 10 estimates arrangement information of the indoor units 20 based on information relating to electromagnetic waves acquired by the indoor units 20 performing BLE communication with each other. The management apparatus 10 calculates candidates for the indoor unit 20 installed at an installation location by collating the arrangement information with the position information 81 of the installation locations. In a case where the management apparatus 10 determines that the indoor unit 20 actually installed at the installation location cannot be identified from among the candidates for the indoor unit 20 installed at the installation location, the mobile terminal 60 notifies the position information 81 of the installation location and the unique information of the candidates for the indoor unit 20 installed at the installation location.

In the device registration work assistance system 1 of the present embodiment, if the management apparatus 10 determines that the indoor unit 20 actually installed at the installation location cannot be identified from among the candidates for the indoor unit 20 installed at the installation location, the mobile terminal 60 notifies the position information 81 of the installation location and the unique information of the candidates for the indoor unit 20 installed at the installation location. As a result, the worker 3 can efficiently perform the registration work by performing the registration work only for the installation location for which the identification cannot be made, and the cost and time required for the registration work can be reduced.

(4-2) In the device registration work assistance system 1 of the present embodiment, the installation locations include a first location and a second location different from the first location. The mobile terminal 60 includes the input unit 62. The input unit 62 inputs information relating to the registration work. In a case where the management apparatus 10 determines that the indoor units 20 actually installed at the first location and the second location cannot be identified, when the position information 81 of the first location and the unique information of the indoor unit 20 installed at the first location are registered in association with each other using the input unit 62, the management apparatus 10 re-calculates the candidates for the indoor unit 20 installed at the second location. In a case where the management apparatus 10 determines that the indoor unit 20 actually installed at the second location cannot be identified, the mobile terminal 60 notifies the position information 81 of the second location and the unique information of the candidates for the indoor unit 20 installed at the second location.

As a result, every time the indoor unit 20 is registered, the worker 3 can know the latest installation location for which the installed indoor unit 20 cannot be identified and the latest candidates for the indoor unit 20 installed at the installation location.

(4-3) In the device registration work assistance system 1 of the present embodiment, the installation locations include a first location and a second location different from the first location. The indoor units 20 include a first device and a second device different from the first device. The mobile terminal 60 includes the input unit 62. The input unit 62 inputs information relating to the registration work. In a case where the first device and the second device are candidates for the indoor units 20 installed at the first location and the second location and are not candidates for an indoor unit 20 installed at an installation location other than the first location and the second location, when the position information 81 of the first location and the unique information of the first device are registered in association with each other using the input unit 62, the management apparatus 10 registers the position information 81 of the second location and the unique information of the second device in association with each other.

As a result, the worker 3 can save the time of registering the installation location and the unique information of the indoor unit 20 in association with each other.

(4-4) In the device registration work assistance system 1 of the present embodiment, the mobile terminal 60 includes the display unit 63. The display unit 63 displays the information relating to the registration work. The display unit 63 displays the position information 81 of the installation location and the unique information of the candidates for the indoor unit 20 installed at the installation location.

(4-5) In the device registration work assistance system 1 of the present embodiment, the position information 81 of the installation location displayed on the display unit 63 includes an image indicating a position of the installation location. When the image is selected using the input unit 62, the display unit 63 displays the unique information of the candidates for the indoor unit 20 installed at the installation location.

As a result, the device registration work assistance system 1 can prevent the image from being hidden by the unique information of the candidates for the indoor unit 20, even when there is a relatively large number of images indicating the positions of the installation locations.

(4-6) In the device registration work assistance system 1 of the present embodiment, when one of the candidates for the indoor unit 20 installed at the installation location on the display unit 63 is selected using the input unit 62, the management apparatus 10 registers the position information 81 of the installation location and the unique information of the selected indoor unit 20 in association with each other.

(4-7) In the device registration work assistance system 1 of the present embodiment, the management apparatus 10 calculates, for each combination of the installation location and the indoor unit 20, a first sum that is a sum of distances, for each indoor unit 20, between the installation location where the indoor unit 20 is installed in the combination and the position of the indoor unit 20 in the estimated arrangement information. The management apparatus 10 aggregates reciprocals of the first sums for each indoor unit 20 appearing at the installation location, among the combinations in which the first sum is smaller than a predetermined value. The management apparatus 10 regards the indoor unit 20 having a large aggregated value as being the indoor unit 20 that is highly likely to be actually installed at the installation location.

### (5) Modifications

### (5-1) Modification 1A

In the present embodiment, the devices selected by the device registration work assistance system 1 are the indoor units 20 constituting the air conditioning system 2. However, the devices are not limited to the indoor units 20, and may be communication devices, such as IoT devices, having a communication function similar to that of the indoor units 20 of the present embodiment.

### (5-2) Modification 1B

In the present embodiment, the address registration work is executed by the management apparatus 10 having the functions of the registration unit 191 and the like. However, instead of the management apparatus 10, the address registration work may be executed by the controller 40 having the same functions as those of the management apparatus 10.

### (5-3) Modification 1C

In the present embodiment, the mobile terminal 60 notifies the worker 3 of the position information 81 of the installation location of the indoor unit 20 and the unique information of the candidates for the indoor unit 20 installed at the installation location by displaying the information on the display unit 63.

However, the mobile terminal 60 may notify the position information 81 of the installation location of the indoor unit 20 and the unique information of the candidates for the indoor unit 20 installed at the installation location by sound.

### (5-4) Modification 1D

In the present embodiment, if the management apparatus 10 determines that the indoor unit 20 actually installed at an installation location cannot be identified, the management apparatus 10 transmits the address registration information 82 after the determination to the mobile terminal 60 without registering the indoor unit 20 for the installation location for which the identification cannot be made. The mobile terminal 60 displays the position information 81 of an installation location and the unique information of the candidates for the indoor unit 20 installed at the installation location.

However, if the management apparatus 10 determines that the indoor unit 20 actually installed at the installation location cannot be identified, the management apparatus 10 may also, for the installation location for which the identification cannot be made, register the position information of the installation location and one of the candidates for the indoor unit 20 installed at the installation location in association with each other, and transmit the address registration information 82 after the determination to the mobile terminal 60. Thereafter, the mobile terminal 60 displays the position information 81 of the installation location and the unique information of the candidates for the indoor unit 20 installed at the installation location.

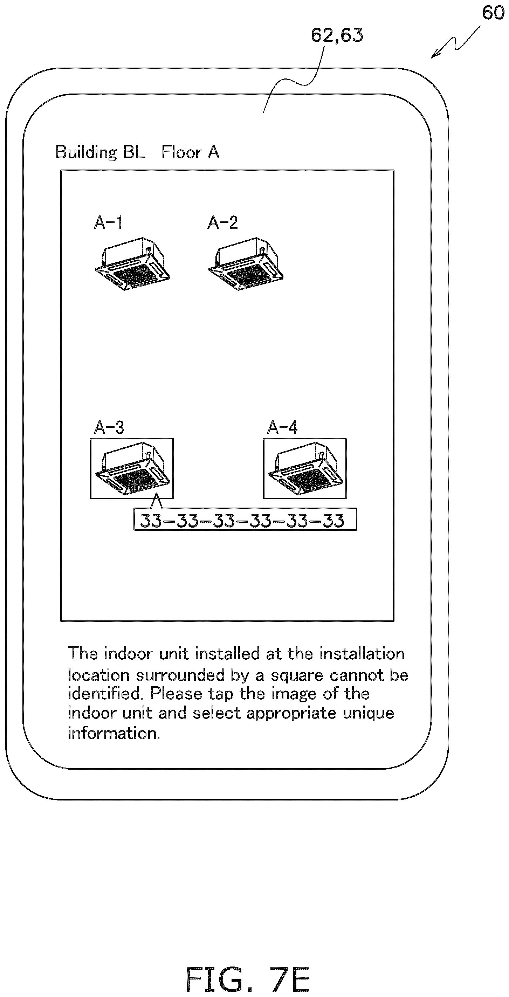

The management apparatus 10 registers, for the installation location for which the identification cannot be made, the position information of the installation location and the indoor unit 20 having the highest installation probability among the candidates for the indoor unit 20 installed at the installation location in association with each other, for example. For example, in Table 7, the management apparatus 10 registers the installation location A-3 and the indoor unit 20c having the highest installation probability (53%) in association with each other. At this time, for example, the mobile terminal 60 displays the installation location A-3 surrounded by a square, as illustrated in Fig. 7C. In Fig. 7C, when the image of the indoor unit 20 indicating the installation location A-3 is tapped by the worker 3 using the input unit 62, the mobile terminal 60 displays the unique information of the indoor unit 20c registered for the installation location A-3, as illustrated in Fig. 7E. In this case, while only one piece of the unique information of the candidates for the indoor unit 20 installed at the installation location A-3 is displayed, the worker 3 moves directly below the installation location A-3 and displays the radio wave intensity list, in order to confirm that the indoor unit 20c is correctly installed at the installation location A-3, for example.

### (5-5) Modification 1E

In the present embodiment, the worker 3 knows the unique information of the indoor unit 20 installed at an installation location by using the radio wave intensity list. However, the worker 3 may designate the unique information of the indoor unit 20 and know the unique information of the indoor unit 20 by using the mobile terminal 60 in which an application capable of operating the indoor unit 20 is installed. The mobile terminal 60 separately acquires the unique information of all the indoor units 20 from the management apparatus 10.

The worker 3, for example, designates the unique information of a certain indoor unit 20 and causes the indoor unit 20 to perform an air-blowing operation. The worker 3 can visually check the installation location of the indoor unit 20 performing the air-blowing operation to know the unique information of the indoor unit 20 installed at the installation location.

(5-6) While the embodiments of the present disclosure have been described above, it will be understood that various changes in form or detail may be made thereto without departing from the spirit and scope of the present disclosure as set forth in the appended claims.

### Reference Signs List

- 1: device registration work assistance system
- 3: worker
- 10: management apparatus
- 20: indoor unit (device)
- 27: communication unit
- 60: mobile terminal (notification apparatus)
- 62: input unit
- 63: display unit
- 81: position information
- BL: building

### Citation List

### Patent Literature

PTL 1: Japanese Unexamined Patent Application Publication No. 2009-192149

## Claims

1. A device registration work assistance system (1) comprising:
a plurality of devices (20) installed at a plurality of installation locations in a building (BL);
a management apparatus (10) that stores position information (81) of the installation locations and unique information of the devices and is capable of communicating with the devices; and
a notification apparatus (60) that notifies a worker (3) of information for assisting a registration work of registering the position information of the installation locations and the unique information of the devices installed at the installation locations in association with each other in the management apparatus, wherein
the devices include a communication unit (27) that performs wireless communication with each other, and
the management apparatus
estimates arrangement information of the devices based on information relating to electromagnetic waves acquired by the devices performing wireless communication with each other, and
calculates one or more candidates for the device installed at the installation location by collating the arrangement information with the position information of the installation locations, and
in a case where the management apparatus determines that the device actually installed at the installation location cannot be identified from among the one or more candidates for the device installed at the installation location, the notification apparatus notifies the position information of the installation location and the unique information of the one or more candidates for the device installed at the installation location.

2. The device registration work assistance system (1) according to claim 1, wherein
the installation locations include a first location and a second location different from the first location,
the notification apparatus includes an input unit (62) that inputs information relating to the registration work,
in a case where the management apparatus determines that the devices actually installed at the first location and the second location cannot be identified, when the position information of the first location and the unique information of the device installed at the first location are registered in association with each other using the input unit,
the management apparatus re-calculates one or more candidates for the device installed at the second location, and
in a case where the management apparatus determines that the device actually installed at the second location cannot be identified, the notification apparatus notifies the position information of the second location and the unique information of the one or more candidates for the device installed at the second location.

3. The device registration work assistance system (1) according to claim 1, wherein
the installation locations include a first location and a second location different from the first location,
the devices include a first device and a second device different from the first device,
the notification apparatus includes an input unit (62) that inputs information relating to the registration work, and
in a case where the first device and the second device are candidates for the devices installed at the first location and the second location and are not candidates for the device installed at an installation location other than the first location and the second location, when the position information of the first location and the unique information of the first device are registered in association with each other using the input unit, the management apparatus registers the position information of the second location and the unique information of the second device in association with each other.

4. The device registration work assistance system (1) according to claim 2 or 3, wherein
the notification apparatus includes a display unit (63) that displays the information relating to the registration work, and
the display unit displays the position information of the installation location and the unique information of the one or more candidates for the device installed at the installation location.

5. The device registration work assistance system (1) according to claim 4, wherein
the position information of the installation location displayed on the display unit includes an image indicating a position of the installation location, and
when the image is selected using the input unit, the display unit displays the unique information of the one or more candidates for the device installed at the installation location.

6. The device registration work assistance system (1) according to claim 4 or 5, wherein
when one of the one or more candidates for the device installed at the installation location on the display unit is selected using the input unit, the management apparatus registers the position information of the installation location and the unique information of the selected device in association with each other.

7. The device registration work assistance system (1) according to any one of claims 1 to 6, wherein
the notification apparatus notifies the position information of the installation location and the unique information of the one or more candidates for the device installed at the installation location by sound.

8. The device registration work assistance system (1) according to any one of claims 1 to 7, wherein
in the case where the management apparatus determines that the device actually installed at the installation location cannot be identified,
the management apparatus performs a first registration process of registering the position information of the installation location and one of the one or more candidates for the device installed at the installation location in association with each other, and then the notification apparatus notifies the position information of the installation location and the unique information of the one or more candidates for the device installed at the installation location, or
the management apparatus does not perform the first registration process, and the notification apparatus notifies the position information of the installation location and the unique information of the one or more candidates for the device installed at the installation location.

9. The device registration work assistance system (1) according to any one of claims 1 to 8, wherein
the management apparatus
calculates, for each combination of the installation location and the device, a first sum that is a sum of distances, for each device, between the installation location where the device is installed in the combination and the position of the device in the arrangement information, and
aggregates reciprocals of the first sums for each of the devices appearing at the installation location, among the combinations in which the first sum is smaller than a predetermined value, and regards the device having a large aggregated value as being the device that is highly likely to be actually installed at the installation location.
